# FASCICULE DE BREVET EUROPEEN

(11) **EP 3 137 860 B1**
(45) Date de publication et mention de la délivrance du brevet: **06.06.2018**
(21) Numéro de dépôt: 15725811.2
(22) Date de dépôt: 27.04.2015
(51) Int. Cl.: G01G 19/02

(54) **PROCEDE D'AIDE A L'ESTIMATION OPTIQUE DE LA MASSE D'UN VEHICULE GARE EN ZONE PEU LUMINEUSE**
VERFAHREN ZUR HILFE BEI DER OPTISCHEN BESTIMMUNG DER MASSE EINES FAHRZEUGS WELCHES IN EINER ZONE MIT WENIG LICHTEINFALL GEPARKT IST.
METHOD TO AID THE OPTICAL ESTIMATION OF THE MASS OF A VEHICLE PARKED IN A POORLY LIGHTED ZONE.

(30) Priorité: 29.04.2014 FR 1453859
(43) Date de publication de la demande: 08.03.2017
(73) Titulaire: Renault S.A.S., 92100 Boulogne-Billancourt (FR)
(72) Inventeur: PITA-GIL, Guillermo, F-75014 Paris (FR); DESFRICHES, Christophe, F-27120 Pacy-sur-eure (FR)
(86) Numéro de dépôt international: PCT/FR2015/051138
(87) Numéro de publication internationale: WO 2015/166181

(56) Documents cités:
- FR-A1- 2 994 259
- US-A1- 2011 267 200

## Description

L'invention a pour objet l'estimation de la masse d'un véhicule par mesure optique. De telles mesures de masse sont par exemple décrites dans le brevet FR 2 994 259 qui propose de calculer une valeur de charge sur un train de roues du véhicule, en fonction du débattement de ce train estimé par analyse d'image. Lorsque le véhicule est garé dans un endroit peu lumineux, l'analyse d'image peut ne pas pouvoir être réalisée avec suffisamment de fiabilité. L'utilisateur du véhicule peut néanmoins souhaiter pouvoir estimer la charge de son véhicule.

L'invention a pour but de proposer une méthode de détermination de la masse d'un véhicule, par exemple d'un véhicule utilitaire, à l'aide d'un ordiphone, permettant à l'utilisateur de l'ordiphone d'estimer la masse de son véhicule même lorsque le véhicule est garé dans un endroit peu lumineux.

A cette fin, l'invention propose un procédé d'aide à la détermination de la masse d'un véhicule à l'aide d'un ordiphone dont les roues sont par exemple montées à l'intérieur de passages de roues, comprenant les étapes suivantes :
a) mémoriser des valeurs physiques caractéristiques du véhicule,
b) afficher sur l'écran de l'ordiphone, le dessin d'un premier cercle dont le diamètre est fonction des valeurs physiques caractéristiques, et superposer ledit premier cercle à une image filmée par l'ordiphone. Le centre du cercle se trouve de préférence dans une première moitié inférieure de l'écran. Le centre et le diamètre du premier cercle restent fixes pendant l'affichage,
c) superposer sur l'image filmée, outre le dessin du premier cercle, une échelle graduée verticalement,

Le procédé peut comprendre, outre les étapes précédentes exécutées par l'ordiphone, les étapes suivantes exécutées par un opérateur :
d) placer l'ordiphone sensiblement dans un plan vertical parallèle à une roue du véhicule de manière à ce que l'image comprenne la roue du véhicule et au moins une portion d'un contour de passage de roue associé,
e) déplacer l'ordiphone dans le plan vertical jusqu'à ce que le premier cercle recouvre des points remarquables de la roue.

Dans cette position, l'échelle recouvre alors verticalement le bord du passage de roue, c'est-à-dire s'étend verticalement de part et d'autre du passage de roue. L'échelle peut être une échelle de couleurs, de graduations ou de textures variant le long d'une direction verticale de l'écran de l'ordiphone. L'image filmée reste de préférence visible sur au moins un côté de l'échelle, de manière à pouvoir associer une graduation, une texture ou une couleur de l'échelle à chaque zone verticale de l'image longée par l'échelle. De préférence, l'échelle est superposée à une portion de la moitié supérieure de l'écran, de manière à pouvoir se superposer à l'image du contour de passage de roue une fois l'ordiphone correctement orienté,
f) lire une valeur indiquée par l'échelle au niveau de la graduation correspondant à une intersection entre l'échelle et l'image du contour de passage de roue.

L'ordiphone peut en outre estimer un angle d'inclinaison par rapport à la verticale d'au moins un axe de référence de l'ordiphone, et adapter les graduations de l'échelle par rapport à l'inclinaison.

Selon un mode de réalisation avantageux, l'ordiphone affiche une échelle dont les graduations se contractent dans le sens vertical quand l'inclinaison de l'ordiphone augmente.

De préférence, l'ordiphone émet un message d'alerte si l'angle d'inclinaison est supérieur à un seuil.

De manière préférentielle, le diamètre du premier cercle est choisi pour pouvoir être superposé à un cercle passant par les images des écrous d'assemblage d'une roue du véhicule.

D'autres éléments concentriques au premier cercle peuvent également être superposés à l'image, tels qu'une croix au centre du cercle et/ou un second cercle entourant le premier cercle.

L'invention propose également un produit programme d'ordinateur chargeable directement dans une mémoire d'un ordiphone, comprenant des portions de code de logiciel permettant l'exécution par l'ordiphone du procédé tel que décrit précédemment.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est la représentation schématique d'un véhicule et d'un ordiphone au cours d'une estimation de masse selon l'invention,
- la figure 2 est une représentation schématique d'un ordiphone au cours d'une estimation de masse du véhicule de la figure 1 à l'aide d'un procédé selon l'invention,
- la figure 3 est une autre représentation schématique d'un ordiphone au cours d'une estimation de masse du véhicule de la figure 1, selon une autre variante d'un procédé selon l'invention,
- la figure 4 est une représentation géométrique de positions que peut prendre l'ordiphone au cours d'un procédé selon l'invention,
- la figure 5 est un algorithme simplifié d'un procédé d'estimation de masse de véhicule selon l'invention.

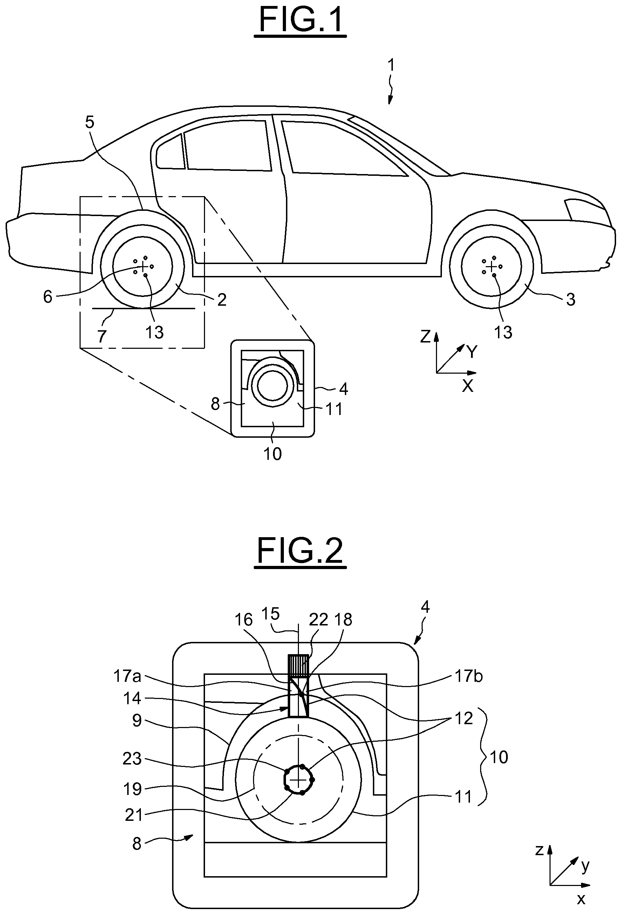

Tel qu'illustré sur la figure 1, un véhicule 1 est garé sur une chaussée 7 sensiblement horizontale.

Les coordonnées spatiales liées à la chaussées sont repérées par un repère orthonormé X, Y, Z. X correspond à un axe horizontal, Z à un axe vertical, le plan XZ étant orienté de manière à contenir la direction longitudinale ou direction d'avancement normale du véhicule.

Le véhicule 1 est ici un véhicule automobile avec un train de roues arrière comprenant deux roues 2 et un train de roues avant comprenant deux roues 3. Les roues 2, 3 sont chacune montées à l'intérieur de passage de roues dont le contour 5 est solidaire de la caisse du véhicule. La caisse et le contour 5 du passage de roue sont reliés par des amortisseurs et des ressorts -non représentés- à un châssis du véhicule comprenant les axes des roues 2, 3. Le contour 5 de chaque passage de roue est donc mobile par rapport au centre 6 de la roue associée, en fonction du débattement de la caisse par rapport au châssis. Dans l'exemple illustré, le contour 5 du passage de roue est délimité par la carrosserie du véhicule et laisse visible l'intégralité de la roue. On peut également envisager des variantes dans lesquelles le contour 5 ou une partie du contour de passage de roue masque une portion de la roue. De manière plus générale, on peut considérer comme contour de passage de roue, un ensemble de points visuellement identifiable et solidaire de la caisse du véhicule, par exemple un contour de garde-boue solidaire de la caisse du véhicule.

Dans l'exemple illustré sur la figure 1, un utilisateur du véhicule ou un opérateur (non représenté) utilise un ordiphone 4 pour acquérir une image 10 visible sur l'écran 8 de visualisation de l'ordiphone. Sur l'image 10 est visible ici la roue arrière 2 et une portion du contour 5 de passage de roue associé. Dans le procédé d'estimation de masse selon l'invention, l'opérateur utilisant l'ordiphone 4 positionne l'ordiphone à l'aide de l'image 10 affichée sur l'écran 8 de l'ordiphone, puis lit des informations affichées par l'ordiphone en surimpression par rapport à l'image filmée. L'utilisateur interprète ensuite ces informations pour en déduire une masse estimée du véhicule, pour en déduire une masse estimée appliquée à cette roue du véhicule, ou encore pour en déduire une masse estimée appliquée à l'essieu associé à la roue. Avant l'estimation de masse du véhicule, l'utilisateur peut charger dans l'ordiphone des données caractéristiques du véhicule. Si l'ordiphone est utilisé pour contrôler la masse d'un seul modèle de véhicule, ces données caractéristiques peuvent être préchargées dans l'ordiphone, qui y fait ensuite appel à chaque nouvelle estimation de masse de véhicule. La base de données contenant les données caractéristiques peut être chargée sur l'ordiphone 4 de manière à y être disponible pour toutes les mesures ultérieures sur un ou plusieurs types de véhicules, ou peut être une base consultable à distance par l'ordiphone avant chaque estimation de masse.

Une image plus détaillée de l'écran de l'ordiphone est illustrée en figure 2. On retrouve sur la figure 2 des éléments de la figure 1, les mêmes éléments étant alors désignés par les mêmes références.

Tel qu'illustré sur la figure 2, l'ordiphone 4 comprend un écran d'affichage 8 dont les bords correspondent à des directions d'axes x et z d'un repère local de l'ordiphone. Un axe y du repère local correspond à la direction dirigée suivant l'épaisseur de l'ordiphone. Dans le procédé selon l'invention, l'ordiphone affiche sur l'écran 8 une image 11 correspondant à l'image issue d'une caméra de l'ordiphone. Des éléments de superposition 12 sont affichés en superposition ou en transparence par rapport à l'image filmée 11. L'image 10 affichée à l'écran résulte donc de la superposition des éléments de superposition 12 et des images filmées 11.

Sur l'image filmée 11, sont visibles l'image de la roue 2 du véhicule vers laquelle l'opérateur dirige la caméra de l'ordiphone ainsi qu'une portion au moins de l'image 9 du contour 5 de passage de la roue.

Sur l'image 11 apparaissent également les images 23 des écrous 13 de fixation de la roue. Suite à un positionnement adéquat de l'ordiphone par l'utilisateur, un des éléments de superposition 12, qui est un cercle 21 dont le diamètre et la position par rapport à l'écran restent constants pendant l'affichage, se trouve superposé aux images 23 des écrous 13.

En partie supérieure de l'écran 8, est affiché un abaque 14 qui s'étend verticalement de part et d'autre de l'image 9 du contour de passage de roue lorsque l'ordiphone est correctement positionné. L'abaque 14 peut ainsi permettre de lire une information quantifiée, par exemple sous forme de couleur, ou à l'aide d'une échelle graduée, en fonction d'un point de rencontre entre la ligne 9 et l'abaque 14. L'abaque peut être par exemple une échelle de couleurs avec une gradation de couleurs du haut en bas de l'abaque, une échelle de dégradé de niveau de gris, ou une autre forme d'abaque permettant de relier une position sur une échelle linéaire et une valeur, par exemple une graduation verticale chiffrée, comprenant notamment au moins un trait horizontal ou une marque ponctuelle de faible étendue verticale correspondant à un seuil de masse admissible pour le véhicule.

Dans l'exemple illustré en figure 2, l'abaque 14 comprend une ligne de lecture 16 dont le point d'intersection 18 avec la ligne 9 permet de lire sur une échelle horizontale 22 une estimation de la charge appliquée sur la roue.

L'abaque comporte ici en outre une ligne frontière 15 correspondant au seuil de masse admissible pour le véhicule, et qui divise la zone d'affichage de l'abaque en une portion gauche 17a correspondant aux masses admissibles du véhicule et une portion droite 17b correspondant aux états de surcharge du véhicule.

La position et le diamètre du cercle 21 restent fixes pendant l'affichage destiné à estimer la masse d'un véhicule donné. Suivant les variantes de réalisation, l'affichage de l'abaque 14 peut également être figé par rapport à l'écran ou peut, comme décrit plus loin, être variable en fonction d'une inclinaison mesurée de l'ordiphone.

La taille du cercle 21, sa position ainsi que la disposition de l'abaque 14 sont fonction de données caractéristiques du véhicule et peuvent être répertoriées dans une base de données par exemple en fonction du modèle de véhicule. Pour chaque véhicule particulier, la base de données peut ensuite être enrichie par des valeurs mesurées sur le véhicule lui-même, par exemple également à l'aide de mesures optiques utilisant un ordiphone.

Afin de réaliser l'estimation de masse pour un véhicule garé sur une chaussée en pente, l'opérateur place l'ordiphone 4 de manière à ce que le plan de l'écran 8 de l'ordiphone se trouve sensiblement dans un plan parallèle à l'axe X-Z. Le plan xz de l'écran 8 de l'ordiphone se trouve alors parallèle à un plan médian longitudinal du véhicule.

L'opérateur active un logiciel d'aide à l'estimation de la masse, qui met en marche la caméra de l'ordiphone 4 et affiche une image de contrôle sur l'écran 8 de l'ordiphone, montrant les éléments du véhicule filmés par la caméra. Le logiciel superpose à l'image de contrôle de la caméra, un cercle 21 qui est fixe par rapport à l'écran. L'opérateur superpose le cercle 21 aux images des écrous 13 de la roue sur l'image de contrôle, c'est-à-dire place le cercle 21 de manière à ce qu'il passe par l'image de chacun des écrous 13. Par exemple, l'opérateur se rapproche et s'éloigne du véhicule jusqu'à ce que la taille du cercle 21 soit superposable au cercle dessiné par les écrous, en tenant l'ordiphone verticalement, un des axes x de l'ordiphone restant parallèle au sol et de préférence parallèle à l'axe longitudinal du véhicule, et l'autre axe y de l'ordiphone étant sensiblement vertical.

Une fois le cercle 21 superposé à l'image des écrous, l'utilisateur immobilise l'ordiphone et attend que l'affichage de l'abaque 14 se stabilise. L'utilisateur lit alors une indication sur l'abaque 14 au niveau d'un point de rencontre entre l'abaque et de la ligne 9 image du contour 5 de la roue sur l'écran 8. Le point de rencontre peut se trouver sur un côté de l'abaque (par exemple pour un abaque d'd'échelle de couleur ou pour un abaque de dégradé de niveaux de gris) ou dans la largeur de l'abaque, par exemple si l'abaque est affiché en transparence. Même si les conditions de luminosité ne sont pas optimales, l'utilisateur peut ainsi utiliser sa propre appréciation pour extrapoler au besoin les portions nettement visibles du contour 9 de l'image du passage de roue, et pour évaluer la marge d'erreur d'estimation entre les positions extrémales qui lui semblent pouvoir encore correspondre à la position du contour de passage de roue. Une légende affichée également en surimpression sur l'écran de l'ordiphone peut indiquer le domaine de couleurs ou la portion de l'abaque correspondant à une masse acceptable. Dans un mode de réalisation simplifié, l'abaque peut se résumer à un simple rectangle ou à une ligne indiquant la position la plus basse autorisée pour le sommet du contour de passage de roue.

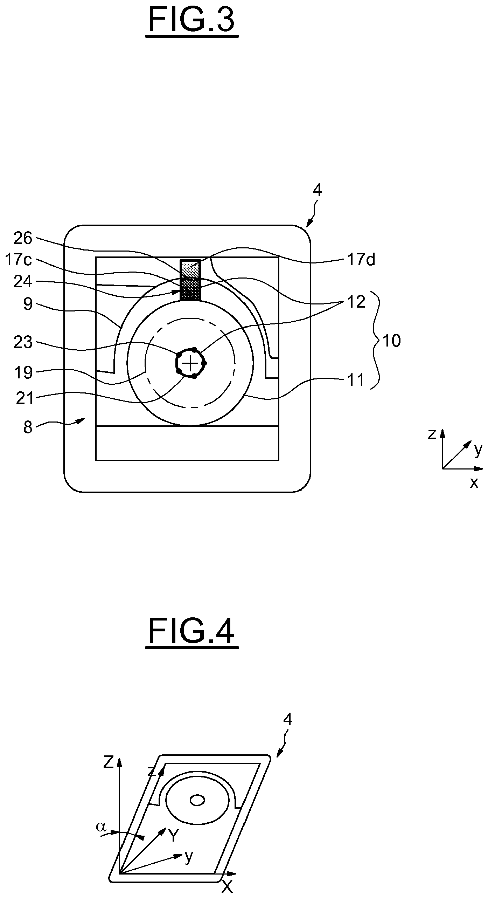

La figure 3 illustre une image détaillée de l'écran de l'ordiphone de la figure 1, dans un autre mode de réalisation de l'invention. On retrouve sur la figure 3 des éléments des figures 1 et 2, les mêmes éléments étant alors désignés par les mêmes références. Sur l'ordiphone de la figure 3, l'abaque de lecture, référencé 24, est un abaque de niveaux de gris. Une frontière horizontale 26 sépare l'abaque en une portion haute 17d correspondant aux masses admissibles, et une portion basse 17c correspondant aux masses excessives. Selon les variantes de réalisation, la lecture peut se faire au niveau de l'intersection de l'image 9 du contour de roue et du bord de l'abaque, ou peut se faire au point le plus haut du passage de roue. Une échelle de niveaux de gris (non représentée) peut être affichée par exemple dans une portion basse de l'ordiphone, pour associer une valeur de masse à certains niveaux de gris particuliers. Pour un abaque en niveau de gris, de préférence l'abaque masque localement l'image 11, afin que le niveau de gris ne soit pas altéré par l'image. On peut envisager une variante de réalisation dans laquelle un premier niveau de gris est affiché au dessus de la frontière 26, et un second niveau de gris est affiché en dessous de la frontière 26, l'abaque étant alors à deux niveaux de gris seulement. L'abaque pourrait aussi comporter seulement deux couleurs séparées par une frontière horizontale. Dans ce dernier cas, l'abaque peut par exemple se superposer en semi transparence avec l'image 11 filmée.

Dans un mode de réalisation avantageux, l'ordiphone 4 est équipé d'un ou de plusieurs accéléromètres. Ces accéléromètres sont par exemple utilisés pour améliorer l'ergonomie de l'affichage, et pour faire tourner certaines images affichées en fonction de la position détectée de l'ordiphone par rapport à la verticale. Dans le cadre du procédé de détermination de masse, le logiciel de détermination de masse reçoit les valeurs du ou des accéléromètres de l'ordiphone et en déduit l'angle d'inclinaison α de l'ordiphone. La figure 4 illustre l'angle α que le logiciel implanté dans l'ordiphone peut prendre en compte. Comme illustré sur la figure 4 l'angle α correspond à une rotation de l'ordiphone autour de l'axe X horizontal longitudinal du véhicule. L'ordiphone peut être configuré pour ne pas afficher d'abaque si l'inclinaison α est supérieure à un seuil d'inclinaison. En deçà de ce seuil d'inclinaison, l'ordiphone peut être configuré pour modifier l'affichage de l'abaque en fonction de l'inclinaison mesurée de l'ordiphone : en effet, l'inclinaison de l'image provoquant une contraction de l'image filmée suivant le sens vertical, l'ordiphone peut être configuré pour afficher l'abaque en multipliant la hauteur verticale de l'abaque par un facteur d'échelle, par exemple le cosinus de l'angle α, et en multipliant également la distance entre un point particulier de l'abaque et le centre du cercle 21, par ce même facteur d'échelle. Selon une variante de réalisation, l'affichage de la hauteur totale de l'abaque selon l'axe y de l'écran n'est pas modifiée, mais l'échelle de l'abaque est contractée par le facteur d'échelle. Selon encore une autre variante de réalisation, l'ordiphone n'affiche pas d'abaque dès qu'une inclinaison même faible est détectée. Une correction d'échelle n'est alors plus nécessaire. Le procédé peut ne pas utiliser d'accéléromètre. Le positionnement vertical de l'ordiphone est alors laissé à l'appréciation de l'utilisateur.

Selon une variante de réalisation, l'estimation de la masse totale du véhicule peut se faire à partir de la visualisation sur l'ordiphone d'une seule roue du véhicule. Dans ce cas l'analyse est effectuée de préférence sur une roue arrière du véhicule pour les véhicules transportant leur masse utile plutôt vers l'arrière du véhicule.

Selon un autre mode de réalisation, l'ordiphone peut être configuré pour estimer séparément la charge appliquée au-dessus de chaque roue du véhicule. L'utilisateur peut ensuite sommer ces masses pour estimer la masse totale du véhicule.

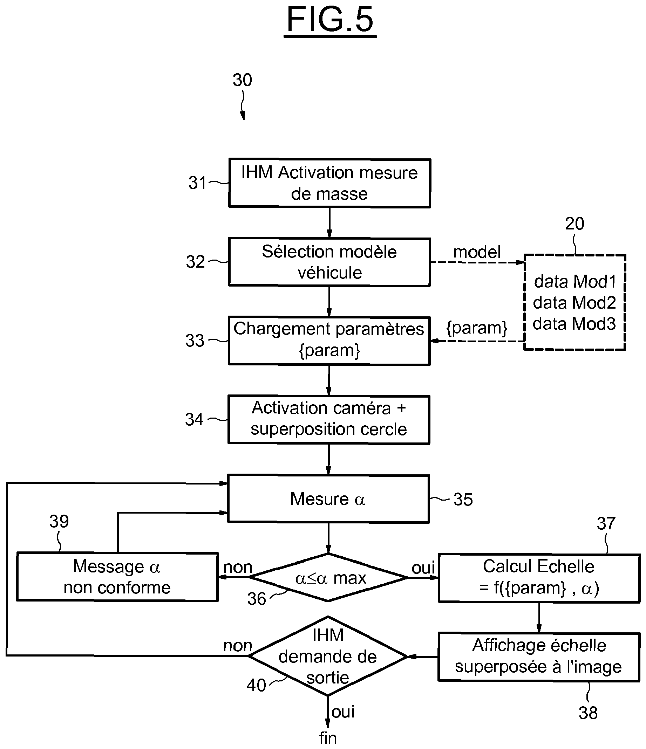

La figure 5 illustre de manière simplifiée un algorithme 30 d'estimation d'une masse appliquée sur un ressort de suspension d'une roue suivant un procédé selon l'invention. Comme mentionné précédemment, l'ordiphone peut également, selon les variantes de réalisation, être configuré pour afficher un abaque se rapportant directement à la charge totale du véhicule. Tel qu'illustré sur la figure 5, à une étape 31 un opérateur active le logiciel enregistré dans l'ordiphone 4 des figures 1 et 2, par exemple à l'aide d'une interface homme/machine « IHM ». Si le logiciel n'est pas pré-paramétré pour fonctionner sur un modèle de véhicule particulier, alors à une étape 32, l'utilisateur peut entrer une donnée caractéristique du véhicule, par exemple une référence de modèle de véhicule ou un numéro de plaque d'immatriculation. En fonction de ce paramètre, l'ordiphone consulte, dans une étape 20, une base de données data Mod, interne ou externe à l'ordiphone, dans laquelle il récupère une série de données {param} ou paramètres caractéristiques du véhicule, dans une étape 33. Le groupe de paramètres {param} peut notamment comprendre une valeur relative à la position et au diamètre d'affichage du cercle 21, ainsi que les dimensions (éventuellement couleurs) et position d'affichage de l'abaque 14. Une fois chargés les paramètres caractéristiques du véhicule, l'ordiphone se place à une étape 34 en mode acquisition et affiche sur l'écran l'image captée par la caméra de l'ordiphone, à laquelle il superpose le cercle 21 fixe par rapport à l'écran. L'utilisateur repositionne alors l'ordiphone de manière à ce que le cercle 21 passe par les images des écrous de la roue, tel que précédemment décrit. Pendant toute la période d'affichage en vue d'estimer la masse, l'ordiphone mesure l'inclinaison α (étape 35), et vérifie à une étape 36 si cette valeur reste inférieure à un seuil. Si l'inclinaison est supérieure au seuil, à une étape 39 l'ordiphone envoie un message d'alerte, et cesse l'affichage de l'abaque. Si l'inclinaison est inférieure au seuil, à une étape 37, l'ordiphone calcule un facteur d'échelle et affiche à une étape 38 l'abaque 14 sur l'écran 8 en superposition à l'image filmée 11. Un test 40 permet d'interrompre à la demande de l'utilisateur, via une interface homme machine (IHM) le processus d'affichage et de réajustement de l'abaque.

L'invention ne se limite pas aux exemples de réalisation décrits et peut se décliner en de nombreuses variantes. Une légende affichée avec l'abaque peut proposer des valeurs chiffrées ou des graduations qualitatives de part et d'autre d'une frontière de masse autorisée. Un enregistrement d'image incluant l'abaque superposé peut être prévu. Une image ainsi enregistrée peut être agrandie à l'écran pour visualiser plus en détail la zone d'intersection entre l'image du contour de passage de roue et l'abaque et faciliter ainsi la lecture de valeur sur l'abaque. Le masque de saisie de l'image peut comporter en plus du cercle 21, d'autres éléments se superposant à l'image tels que des cercles 19 plus grands et/ou une croix. Si l'écran de l'ordiphone est circulaire, une ligne d'horizon peut être superposée à l'image pour indiquer l'orientation préconisée de l'ordiphone par rapport à l'horizontale. Le procédé peut être appliqué à un véhicule automobile ou à un véhicule tracté, telle qu'une remorque ou une caravane. Il n'est pas nécessaire que tout le contour du passage de roue soit visible sur l'écran de l'ordiphone. Une portion de contour de passage de roue située à l'aplomb du centre de la roue suffit. En pratique la largeur de la portion de passage de roue visible est essentiellement imposée à l'utilisateur par le cercle 23 le guidant pour placer l'ordiphone à la distance adéquate par rapport au logiciel d'aide à la lecture enregistré dans l'ordiphone.

L'abaque affiché peut par exemple commencer au dessus de l'image du contour de la roue et s'étendre, de préférence suivant une direction sensiblement verticale, vers une portion de contour de passage de roue. Selon un premier mode de réalisation, l'abaque s'étend jusqu'au dessus du contour de passage de roue même lorsque le véhicule est à vide. Selon un autre mode de réalisation, l'abaque s'étend jusqu'au contour de passage de roue et s'arrête au passage de roue lorsque le véhicule se trouve chargé au seuil de masse admissible. L'abaque sert alors uniquement à lire la masse lorsque le véhicule est en surcharge.

Selon encore un autre mode de réalisation, l'abaque peut être positionné de manière à lire uniquement la masse du véhicule lorsque le véhicule est chargé en deçà de sa masse seuil admissible, par exemple l'abaque peut s'étendre uniquement au dessus de l'image du contour de passage de roue lorsque le véhicule est chargé à sa masse seuil.

Le procédé peut être un mode de fonctionnement particulier d'un logiciel de masse par analyse d'image lorsque les conditions de luminosité sont insuffisantes pour effectuer l'analyse. Un tel procédé peut par exemple comprendre les étapes suivantes :
- consulter une base de données en fonction d'un identifiant permettant d'identifier le modèle du véhicule, et charger dans l'ordiphone une série de valeurs caractéristiques du modèle identifié,
- acquérir une image d'une roue du véhicule et du passage de roue du véhicule à l'aide d'un appareil de prises de vues de l'ordiphone,
- évaluer un niveau de qualité de l'image en vue d'une analyse numérique de l'image,
- si le niveau de qualité de l'image est supérieur au seuil, estimer par analyse d'image une distance entre la roue et le passage de roue,
- si le niveau de qualité de l'image est inférieur au seuil, basculer sur le mode d'affichage cercle + échelle permettant à l'utilisateur de l'ordiphone d'estimer lui-même la masse par lecture de l'échelle.

Le procédé selon l'invention permet d'estimer de manière optique la masse, et notamment la masse utile d'un véhicule par un procédé simple pouvant être appliqué même dans un contexte de visibilité réduite.

## Revendications

1. Procédé d'aide à la détermination de la masse d'un véhicule (1) à l'aide d'un ordiphone (4), comprenant les étapes suivantes :
-a) mémoriser des valeurs physiques ({param}) caractéristiques du véhicule (1),
b) afficher sur l'écran (8) de l'ordiphone, le dessin d'un premier cercle (21) dont le diamètre est fonction des valeurs physiques caractéristiques ({param}), et superposer ledit premier cercle à une image (11) filmée par l'ordiphone,
c) superposer sur l'image filmée (11), outre le dessin du premier cercle, une échelle (14) graduée suivant un premier axe (z) de l'ordiphone.

2. Procédé selon la revendication 1, comprenant en outre les étapes suivantes :
d) placer l'ordiphone (4) sensiblement dans un plan vertical (XZ) parallèle à une roue (2) du véhicule de manière à ce que l'image (11) comprenne la roue (2) du véhicule et au moins une portion d'un contour (5) de passage de roue associé, l'échelle (14) étant sensiblement parallèle à la verticale,
e) déplacer l'ordiphone (4) dans le plan vertical jusqu'à ce que le premier cercle (21) recouvre des points remarquables (23) de la roue,
f) lire une valeur indiquée par l'échelle (14) au niveau de la graduation correspondant à une intersection entre l'échelle et l'image (9) du contour (5) de passage de roue.

3. Procédé selon la revendication 1, comprenant en outre une étape dans laquelle l'ordiphone estime un angle d'inclinaison (α) par rapport à la verticale (Z) d'au moins un axe de référence (z) de l'ordiphone, et adapte les graduations de l'échelle par rapport à l'inclinaison.

4. Procédé selon la revendication 3, dans lequel l'ordiphone (4) affiche une échelle (14) dont les graduations se contractent dans le sens vertical quand l'inclinaison (α) de l'ordiphone augmente.

5. Procédé selon l'une quelconque des revendications précédentes, dans lequel l'ordiphone (4) émet un message d'alerte si l'angle d'inclinaison (α) est supérieur à un seuil.

6. Procédé selon l'une quelconque des revendications précédentes, dans lequel le diamètre du premier cercle (21) est choisi pour pouvoir être superposé à un cercle passant par les images (23) des écrous (13) d'assemblage d'une roue (2) du véhicule.

7. Procédé selon l'une quelconque des revendications précédentes, dans lequel d'autres éléments géométriques (19) concentriques au premier cercle (21) sont également superposés à l'image, tels qu'une croix au centre du premier cercle et/ou un second cercle (19) entourant le premier cercle.

8. Procédé selon l'une quelconque des revendications précédentes, dans lequel l'échelle (14) graduée s'étend sur l'écran de part et d'autre de son intersection avec le contour du passage de roue, lorsque le véhicule est chargé à sa charge maximale admissible.

9. Procédé selon la revendication 8, dans lequel l'échelle (14) graduée s'étend jusqu'au contour extérieur du pneu de la roue.

10. Produit programme d'ordinateur chargeable directement dans une mémoire d'un ordiphone (4), comprenant des portions de code de logiciel permettant l'exécution par l'ordiphone (4) du procédé selon la revendication 1.

## Patentansprüche

1. Verfahren zur Hilfe bei der Bestimmung der Masse eines Fahrzeugs (1) mithilfe eines Smartphones (4), das die folgenden Schritte umfasst:
a) Speichern charakteristischer physischer Werte ({param}) des Fahrzeugs (1),
b) Anzeigen auf dem Bildschirm (8) des Smartphones der Abbildung eines ersten Kreises (21), dessen Durchmesser von den charakteristischen physischen Werten ({param}) abhängig ist, und Überlagern des ersten Kreises mit einem mit dem Smartphone aufgenommenen Bild (11),
c) Überlagern des aufgenommenen Bilds (11) zusätzlich zu der Darstellung des ersten Kreises mit einer Skala (14) entlang einer ersten Achse (z) des Smartphones.

2. Verfahren nach Anspruch 1, das des Weiteren die folgenden Schritte umfasst:
d) derartiges Platzieren des Smartphones (4) im Wesentlichen in einer vertikalen Ebene (XZ) parallel zu einem Rad (2) des Fahrzeugs, dass das Bild (11) das Rad (2) des Fahrzeugs und mindestens einen Teil einer Kontur (5) des zugehörigen Radkastens umfasst, wobei die Skala (14) im Wesentlichen parallel zur Vertikalen ist,
e) Verschieben des Smartphones (4) in der vertikalen Ebene, bis der erste Kreis (21) wichtige Punkte (23) des Rads abdeckt,
f) Ablesen eines Werts, der durch die Skala (14) angegeben wird, auf der Skaleneinteilung, die einem Schnittpunkt zwischen der Skala und dem Bild (9) der Kontur (5) des Radkastens entspricht.

3. Verfahren nach Anspruch 1, das des Weiteren einen Schritt umfasst, bei dem das Smartphone einen Neigungswinkel (α) zur Vertikalen (Z) auf mindestens einer Bezugsachse (z) des Smartphones schätzt und die Skaleneinteilungen der Skala in Bezug auf die Neigung anpasst.

4. Verfahren nach Anspruch 3, bei dem das Smartphone (4) eine Skala (14) anzeigt, deren Skaleneinteilungen sich bei zunehmender Neigung (α) des Smartphones in vertikaler Richtung verengen.

5. Verfahren nach einem der vorhergehenden Ansprüche, bei dem das Smartphone (4) eine Warnmeldung ausgibt, wenn der Neigungswinkel (α) über einem Schwellenwert liegt.

6. Verfahren nach einem der vorhergehenden Ansprüche, bei dem der Durchmesser des ersten Kreises (21) so gewählt wird, dass er einem Kreis, der durch die Bilder (23) der Befestigungsmuttern (13) eines Rads (2) des Fahrzeugs hindurchgeht, überlagert werden kann.

7. Verfahren nach einem der vorhergehenden Ansprüche, bei dem das Bild gleichermaßen mit anderen geometrischen Elementen (19), die zu dem ersten Kreis (21) konzentrisch sind, überlagert wird, wie z. B. ein Kreuz in der Mitte des ersten Kreises und/oder ein zweiter Kreis (19), der den ersten Kreis umgibt.

8. Verfahren nach einem der vorhergehenden Ansprüche, bei dem sich die Skala (14) auf dem Bildschirm beidseits ihrer Überschneidung mit der Kontur des Radkastens erstreckt, wenn das Fahrzeug mit seiner zulässigen Höchstlast beladen ist.

9. Verfahren nach Anspruch 8, bei dem sich die Skala (14) bis zur Außenkontur des Reifens des Rads erstreckt.

10. Direkt in einen Speicher eines Smartphones (4) ladbares Computerprogrammprodukt, das Softwarecodeteile umfasst, die das Durchführen des Verfahrens nach Anspruch 1 durch das Smartphone (4) gestatten.

## Claims

1. Method for assisting in the determination of the mass of a vehicle (1) using a smartphone (4), comprising the following steps:
a) storing characteristic physical values ({param}) of the vehicle (1),
b) displaying, on the screen (8) of the smartphone, a picture of a first circle (21) whose diameter is dependent on the characteristic physical values ({param}), and superimposing said first circle on an image (11) filmed by the smartphone,
c) superimposing, on the filmed image (11), in addition to the drawing of the first circle, a graduated scale (14) along a first axis (z) of the smartphone.

2. Method according to Claim 1, furthermore comprising the following steps:
d) positioning the smartphone (4) substantially in a vertical plane (XZ) parallel to a wheel (2) of the vehicle, such that the image (11) contains the wheel (2) of the vehicle and at least a portion of an associated wheel arch contour (5), the scale (14) being substantially parallel to the vertical,
e) moving the smartphone (4) in the vertical plane until the first circle (21) covers noteworthy points (23) of the wheel,
f) reading off a value indicated by the scale (14) at the graduation corresponding to an intersection between the scale and the image (9) of the wheel arch contour (5).

3. Method according to Claim 1, furthermore comprising a step in which the smartphone estimates a tilt angle (α) with respect to the vertical (Z) of at least one reference axis (z) of the smartphone, and adjusts the graduations of the scale with respect to the tilt.

4. Method according to Claim 3, wherein the smartphone (4) displays a scale (14) whose graduations contract in the vertical direction when the tilt (α) of the smartphone increases.

5. Method according to any one of the preceding claims, wherein the smartphone (4) emits an alert message if the tilt angle (α) is greater than a threshold.

6. Method according to any one of the preceding claims, wherein the diameter of the first circle (21) is chosen so as to be able to be superimposed on a circle passing through the images (23) of the joint nuts (13) of a wheel (2) of the vehicle.

7. Method according to any one of the preceding claims, wherein other geometrical elements (19) concentric with the first circle (21) are also superimposed on the image, such as a cross in the centre of the first circle and/or a second circle (19) surrounding the first circle.

8. Method according to any one of the preceding claims, wherein the graduated scale (14) extends over the screen on either side of the intersection thereof with the contour of the wheel arch, when the vehicle is loaded to its maximum admissible load.

9. Method according to Claim 8, wherein the graduated scale (14) extends as far as the outer contour of the tyre of the wheel.

10. Computer program product able to be loaded directly in a memory of a smartphone (4), comprising portions of software code enabling the smartphone (4) to execute the method according to Claim 1.
